# EUROPEAN PATENT SPECIFICATION

(11) **EP 0 390 597 B1**
(45) Date of publication and mention of the grant of the patent: **21.06.1995**
(21) Application number: 90303453.6
(22) Date of filing: 30.03.1990
(51) Int. Cl.: H04N 1/32

(54) **Facsimile apparatus**
Faksimilegerät
Appareil de fac-similé

(30) Priority: 31.03.1989 JP 82406/89
(43) Date of publication of application: 03.10.1990
(73) Proprietor: SHARP KABUSHIKI KAISHA, Osaka 545 (JP)
(72) Inventor: Kambara, Ryouji, Souraku-gun, Kyoto (JP)
(74) Representative: Milhench, Howard Leslie

(56) References cited:
- EP-A- 0 244 869
- Patent Abstracts of Japan vol. 13, no. 195 (E-754)(3543) 10 May 1989;& JP-A-01 016071 (FUJITSU LTD) 19 January 1989

## Description

The present invention relates to facsimile apparatus.

### 2. Description of the Prior Art

Some facsimile apparatus have a function for successive transmission and a function for successive reception. By successive transmission is meant successively transmitting the identical scanned record of a document to plural receivers, and by successive reception is meant successively receiving the scanned records of different documents transmitted from plural transmitters.

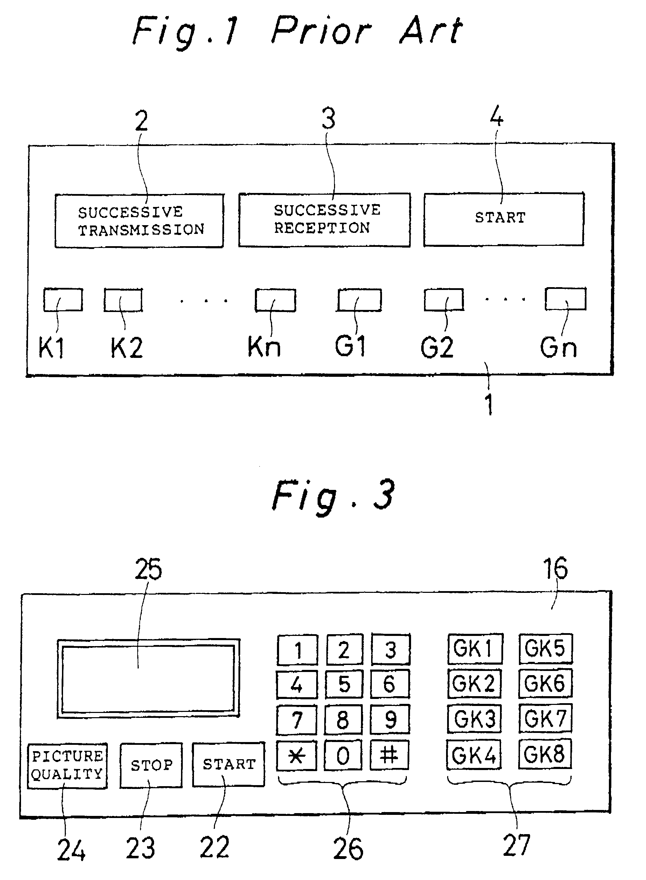

Fig. 1 is a plan view illustrating a control panel 1 of prior art facsimile apparatus. The control panel 1 has a successive transmission key 2 for instructing the successive transmission, a successive reception key 3 for instructing the successive reception and a start key 4 for instructing a start of each operation. The control panel 1 also has dial keys K1 through Kn. Each dial key represents one telephone number stored in memory means of the facsimile apparatus. An operation of each dial key, e.g., K1, causes the corresponding telephone number to be read out from the memory means. The control panel 1 further has group keys G1 through Gn. Each group key represents plural telephone numbers stored in the memory means. An operation of each group key, e.g., G1, causes the corresponding telephone numbers to be successively read out from the memory means.

The successive transmission is performed in the following steps: setting a document in facsimile apparatus; pressing the successive transmission key 2; successively operating the dial keys corresponding to the telephone numbers of specified receivers; and pressing the start key 4. The successive reception is performed in the following steps: pressing the successive reception key 3: successively operating the dial keys corresponding to the telephone numbers of specified transmitters; and pressing the start key 4.

As explained above, in prior facsimile apparatus, the steps for the successive transmission or the successive reception are rather complicated and time-consuming. When the number of specified receivers or transmitters is N, the operation of N+2 keys is required. The use of the group keys may save trouble; the telephone numbers of specified receivers or transmitters are read out by a single operation of one of the group keys, e.g., G1, but still the key operation is rather troublesome.

Another prior art facsimile apparatus is disclosed in EP-A-0 244 869. With this apparatus an operating panel has mode selection keys, different combinations of which are operable to select different operative modes, including a number of broadcast and a number of polling modes. Each broadcast and polling mode has a corresponding group of telephone numbers to be successively dialled following read out from a memory. Following selection of a particular broadcast or polling mode, operation of a further key (specifically, an asterisk key "*") is acquired within a predetermined time to start the operation in the selected mode.

The present invention aims to provide facsimile apparatus which works with simplified key operation and thus has improved usability and controllability.

According to the present invention there is provided facsimile apparatus comprising:
memory means for storing groups of telephone numbers; user-operable key selection means for selecting a said group of telephone numbers; and
control means for selectively operating the apparatus in a successive transmission mode in which image data of a scanned document is transmitted to the receivers of consecutively dialled telephone numbers of a group successively read from said memory means or in a successive reception mode in which image data of scanned documents is required to be transmitted to the apparatus from the transmitters of consecutively dialled telephone numbers of a group successively read from said memory means,
characterised in that said memory means is operable to store said groups of telephone numbers in respective memory regions corresponding to respective key switches of said key selection means, in that the apparatus includes detection means for detecting whether a document is set, and in that said control means is arranged to cause the apparatus to operate in the successive transmission mode using the telephone numbers read from the memory region corresponding to the operated key switch in the case that the detection means detects that a document is set when said key switch is operated, and to cause the apparatus to operate in the successive reception mode using the telephone numbers read from the memory region corresponding to the operated key switch in the case that the detection means does not detect that a document is set when said key switch is operated.

Preferably, the facsimile apparatus further includes display means for displaying the current operation of the facsimile apparatus. Such display means may display information on receivers or transmitters of facsimile.

In the memory means of the facsimile apparatus according to the invention, plural telephone numbers are stored corresponding to each of the key switches. In case that a document is detected as being set in the apparatus by the detection means when one of the key switches is operated, the facsimile apparatus successively reads out from the memory means the telephone numbers of specified receivers corresponding to the operated key switch and consecutively dials the numbers and transmits the scanned record of the document to the receivers.

In case that a document is not detected by the detection means when one of the key switches is operated, the facsimile apparatus successively reads out the telephone numbers of specified transmitters corresponding to the key switch operated from the memory means and consecutively dials the numbers and requires transmission of the scanned records of documents from the transmitters.

In the facsimile apparatus above, the key operation for reading out plural telephone numbers, that is, for the successive transmission or the successive reception, is simple.

The facsimile apparatus according to the invention thus has much improved controllability and usability.

According to the present invention there is also provided a facsimile apparatus having the facilities for the sequential transmission to and reception from a predetermined group of external facsimile apparatuses of image data, the numbers of said external apparatuses being stored in a memory means characterised in that said numbers for said group of external apparatuses are accessible from the memory means in response to actuation of a respective group selection element, and in that means is provided for automatically selecting between sequential transmission and sequential reception according to whether or not a document is set in the apparatus.

An embodiment of the invention will now be described by way of example only with reference to the accompanying drawings wherein:
Fig. 1 is a plan view illustrating a control panel 1 of the prior facsimile apparatus;
Fig. 2 is a block diagram showing an electric construction of facsimile apparatus according to an embodiment of the invention;
Fig. 3 is a plan view illustrating the keyboard 16 of Fig. 2;
Fig. 4 is a flow chart showing the operation of the facsimile apparatus of Fig. 2; and
Figs. 5(1) and 5(2) are plan views of examples shown in the display of Fig. 3.

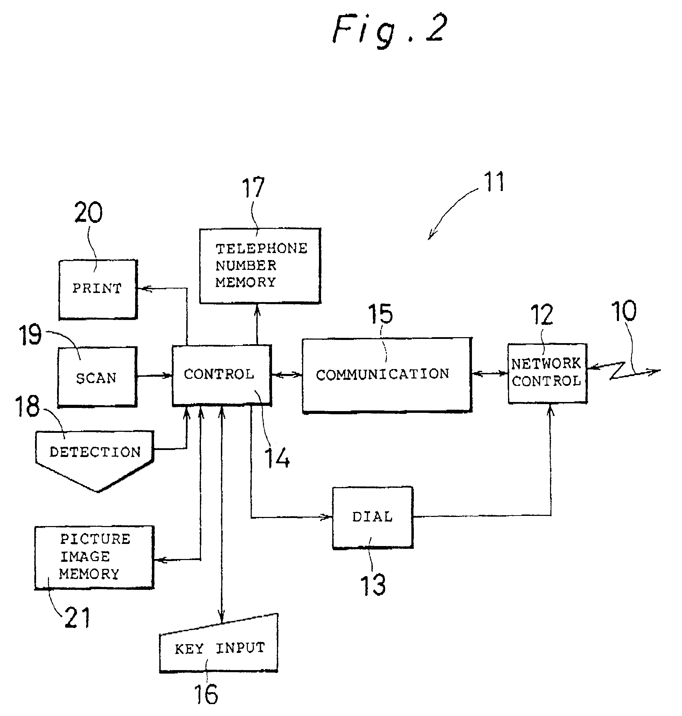

With reference to Fig.2, a facsimile apparatus 11 has a network controller 12 connected to a telephone line 10. The network controller 12 controls the connection of the facsimile apparatus 11 to the telephone line 10.

A communication unit 15 and a dialer 13 are provided between a controller 14 and the network controller 12. The communication unit 15 modulates and demodulates picture data transmitted or received by the facsimile apparatus 11 through the telephone line 10. The dialer 13 dials telephone numbers either stored in a telephone number memory 17 or input from a keyboard 16.

A plurality of memory regions are set in the telephone memory 17 respectively corresponding to the plural group keys 27 and telephone numbers are stored in each of the memory regions.

The controller 14 is connected to a scanner 19 for optically scanning the picture image of a document set in the facsimile apparatus 11, a detector 18 for detecting whether a document is set, a picture image memory 21 for storing picture data sent from the scanner 19 and a printer 20 for printing picture data received through the telephone line 10.

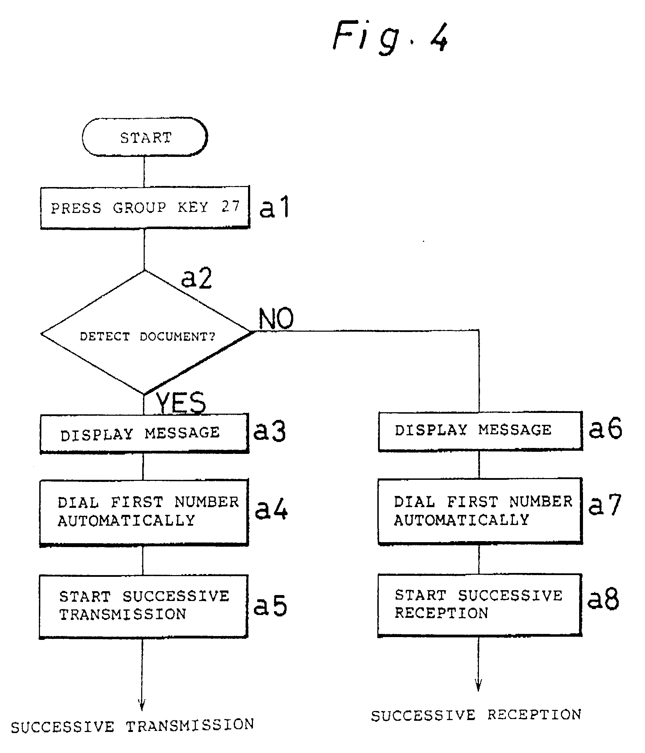

Fig. 3 is a plan view of the keyboard 16. The key board 16 includes a start key 22 for instructing the start of operation of the facsimile apparatus 11, a stop key 23 for instructing the stop of operation of the facsimile apparatus 11 and a picture quality key 24 for specifying the picture quality of the facsimile apparatus 11. The keyboard 16 further includes keys 26 for inputting telephone numbers, group keys 27 for reading out plural telephone numbers from the telephone number memory 17 and a display 25, e.g., a liquid crystal display, for displaying the operation of the facsimile apparatus 11.

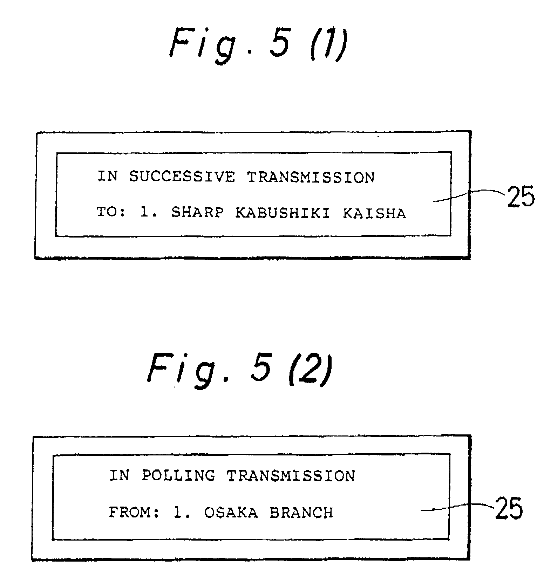

Fig. 4 is a flow chart showing the operation of the facsimile apparatus 11. When one of the group keys 27, e.g., "GK1" key, is pressed at step a1, the apparatus proceeds to step a2, in which it is determined whether a document is set in the facsimile apparatus 11. When it is detected at step a2 that a document is set, the apparatus proceeds to step a3, in which a message is shown in the display 25 of the keyboard 16 as shown in Fig. 5(1). At step a4, the apparatus 11 automatically dials the first telephone number read out from the memory 17 and at step a5, the successive transmission starts. Then the apparatus 11 successively reads out telephone numbers of specified receivers corresponding to the group key GK1 and consecutively dials the numbers and transmits the scanned record of the document to the receivers. The picture data of the document sent from the scanner 19 and stored in the picture image memory 21 are read out from the memory 21 and are transmitted to the second through last receivers.

When it is not detected at step a2 that a document is set, the apparatus proceeds to step a6, in which a message is shown in the display 25 of the keyboard 16 as shown in Fig. 5(2). At step a7, the apparatus 11 automatically dials the first telephone number read out from the memory 17 and at step a8, the successive reception starts. Then the apparatus 11 successively reads out telephone numbers of specified transmitters corresponding to the group key GK1 and consecutively dials the numbers and requires transmission of the scanned records of the documents from the transmitters.

In the facsimile apparatus 11 of the above-described embodiment of the invention, a single key operation is sufficient for starting the successive transmission or the successive reception. The facsimile apparatus 11 thus works with simple key operation and has much improved controllability and usability. It is also useful to show information about receivers or transmitters on the display 25 as shown in Figs. 5(1) and 5(2).

## Claims

1. Facsimile apparatus comprising:
memory means (17) for storing groups of telephone numbers;
user-operable key selection means (27) for selecting a said group of telephone numbers; and
control means (14) for selectively operating the apparatus in a successive transmission mode in which image data of a scanned document is transmitted to the receivers of consecutively dialled telephone numbers of a group successively read from said memory means or in a successive reception mode in which image data of scanned documents is required to be transmitted to the apparatus from the transmitters of consecutively dialled telephone numbers of a group successively read from said memory means,
characterised in that said memory means (17) is operable to store said groups of telephone numbers in respective memory regions corresponding to respective key switches (GK1 to GK8) of said key selection means, in that the apparatus includes detection means (18) for detecting whether a document is set, and in that said control means is arranged to cause the apparatus to operate in the successive transmission mode using the telephone numbers read from the memory region corresponding to the operated key switch in the case that the detection means detects that a document is set when said key switch is operated, and to cause the apparatus to operate in the successive reception mode using the telephone numbers read from the memory region corresponding to the operated key switch in the case that the detection means does not detect that a document is set when said key switch is operated.

2. Facsimile apparatus according to claim 1 further comprising display means (25) for displaying the current operation of the facsimile apparatus.

3. Facsimile apparatus according to claim 2 in which the display means (25) is controlled to display information about receivers or transmitters of facsimile.

4. A facsimile apparatus having the facilities for the sequential transmission to and reception from a predetermined group of external facsimile apparatuses of image data, the numbers of said external apparatuses being stored in a memory means (17) characterised in that said numbers for said group of external apparatuses are accessible from the memory means in response to actuation of a respective group selection element (GK1 to GK8), and in that means (14) is provided for automatically selecting between sequential transmission and sequential reception according to whether or not a document is set in the apparatus.

## Patentansprüche

1. Faksimilegerät mit:
- einer Speichereinrichtung (17) zum Abspeichern von Gruppen von Telefonnummern;
- einer vom Benutzer betätigbaren Tastenauswahleinrichtung (27) zum Auswählen einer Gruppe von Telefonnummern und
- einer Steuereinrichtung (14) zum wahlweisen Betätigen des Geräts in einem Modus mit aufeinanderfolgendem Senden, in dem Bilddaten eines abgerasterten Dokuments an die Empfänger gemäß aufeinanderfolgend gewählten Telefonnummern einer Gruppe, wie sie der Reihe nach aus der Speichereinrichtung gelesen werden, übertragen werden, oder in einem Modus mit aufeinanderfolgendem Empfang, in dem angefordert wird, daß Bilddaten abgerasterter Dokumente von den Sendern gemäß aufeinanderfolgend gewählten Telefonnummern einer Gruppe, wie sie der Reihe nach aus der Speichereinrichtung ausgelesen werden, an das Gerät übertragen werden;
**dadurch gekennzeichnet, daß** die Speichereinrichtung (17) so betrieben werden kann, daß sie die Gruppen von Telefonnummern in jeweiligen Speicherbereichen abspeichert, die jeweiligen Tastenschaltern (GK1 bis GK8) der Tastenauswahleinrichtung entsprechen, **daß** das Gerät eine Erkennungseinrichtung (18) zum Erkennen, ob ein Dokument eingelegt ist, aufweist, und **daß** die Steuereinrichtung so ausgebildet ist, daß sie dafür sorgt, daß das Gerät im Modus für aufeinanderfolgende Übertragung unter Verwendung der aus einem betätigten Tastenschalter entsprechenden Speicherbereich ausgelesenen Telefonnummern betreibt, wenn die Erkennungseinrichtung beim Betätigen des Tastenschalters erkennt, daß ein Dokument eingelegt ist, und sie dafür sorgt, daß das Gerät im Modus für aufeinanderfolgenden Empfang unter Verwendung der aus dem dem betätigten Tastenschalter entsprechenden Speicherbereich ausgelesenen Telefonnummern betrieben wird, wenn die Erkennungseinrichtung beim Betätigen des Tastenschalters nicht erkennt, daß ein Dokument eingelegt ist.

2. Faksimilegerät nach Anspruch 1, ferner mit einer Anzeigeeinrichtung (25) zum Anzeigen des aktuellen Betriebs des Faksimilegeräts.

3. Faksimilegerät nach Anspruch 2, bei dem die Anzeigeeinrichtung (25) so gesteuert wird, daß sie Information zu Empfängern oder Sendern eines Faksimiles anzeigt.

4. Faksimilegerät mit folgendem: Einrichtungen für aufeinanderfolgendes Übertragen von Bilddaten an eine und für aufeinanderfolgenden Empfang von Bilddaten von einer vorgegebenen Gruppe externer Faksimilegeräte, wobei die Nummern der externen Geräte in einer Speichereinrichtung (17) abgespeichert sind, **dadurch gekennzeichnet, daß** die Nummern der Gruppe externer Geräte auf die Betätigung eines jeweiligen Gruppenauswahlelements (GK1 bis GK8) aus der Speichereinrichtung abrufbar sind, und **daß** eine Einrichtung (14) für automatisches Wählen zwischen aufeinanderfolgendem Senden und aufeinanderfolgendem Empfang, abhängig davon, ob ein Dokument in das Gerät eingelegt ist oder nicht, vorhanden ist.

## Revendications

1. Appareil de télécopie comprenant:
des moyens formant mémoire (17) pour emmagasiner des groupes de numéros de téléphone;
des moyens de sélection par touche actionnés par l'opérateur (27), servant à sélectionner l'un desdits groupes de numéros de téléphone; et
des moyens de commande (14) pour faire fonctionner l'appareil de façon sélective, soit dans un mode de transmission successive dans lequel les données d'image d'un document balayé sont transmises aux récepteurs de numéros de téléphone d'un groupe appelés consécutivement, ces numéros étant lus successivement dans lesdits moyens formant mémoire, soit dans un mode de réception successive dans lequel les données d'image de documents balayés doivent être transmises à l'appareil par les émetteurs de numéros de téléphone d'un groupe appelés consécutivement, ces numéros étant lus successivement dans lesdits moyens formant mémoire,
caractérisé en ce que lesdits moyens formant mémoire (17) sont aptes à emmagasiner lesdits groupes de numéros de téléphone dans des régions de mémoire respectives correspondant à des interrupteurs à touche respectifs (GK1 à GK8) desdits moyens de sélection par touche, en ce que l'appareil comprend des moyens de détection (18) pour détecter si un document a été mis en place, et en ce que lesdits moyens de commande sont prévus pour faire fonctionner l'appareil en mode de transmission successive en utilisant les numéros de téléphone lus dans la région de mémoire correspondant à l'interrupteur à touche actionné, dans le cas où les moyens de détection détectent qu'un document a été mis en place lorsque ledit interrupteur à touche est actionné, et pour faire fonctionner l'appareil en mode de réception successive en utilisant les numéros de téléphone lus dans la région de mémoire correspondant à l'interrupteur à touche actionné, dans le cas où les moyens de détection ne détectent pas qu'un document a été mis en place lorsque ledit interrupteur à touche est actionné.

2. Appareil de télécopie selon la revendication 1, comprenant, en outre, des moyens d'affichage (25) pour afficher l'opération en cours de l'appareil de télécopie.

3. Appareil de télécopie selon la revendication 2, dans lequel les moyens d'affichage (25) sont commandés de façon à afficher des informations concernant les récepteurs ou les émetteurs de télécopies.

4. Appareil de télécopie comportant des moyens pour assurer la transmission et la réception séquentielles de données d'image vers et depuis un groupe prédéterminé d'appareils de télécopie extérieurs, les numéros desdits appareils extérieurs étant emmagasinés dans des moyens formant mémoire (17), caractérisé en ce que l'accès, dans les moyens formant mémoire, auxdits numéros correspondant audit groupe d'appareils extérieurs peut être effectué en réponse à l'actionnement d'un élément de sélection de groupe respectif (GK1 à GK8), et en ce que des moyens (14) sont prévus pour sélectionner automatiquement la transmission séquentielle ou la réception séquentielle en fonction du fait qu'un document est, ou n'est pas, mis en place dans l'appareil.
